(19) **Europäisches Patentamt**

**European Patent Office**

**Office européen des brevets**

(11) **EP 1 080 122 B1**

(12) **EUROPEAN PATENT SPECIFICATION**

(45) Date of publication and mention
of the grant of the patent:
**07.01.2004 Bulletin 2004/02**

(51) Int Cl.[7]: **C08F 10/06**, C08F 4/646

(21) Application number: **99922932.1**

(86) International application number:
**PCT/US1999/010307**

(22) Date of filing: **11.05.1999**

(87) International publication number:
**WO 1999/058585 (18.11.1999 Gazette 1999/46)**

(54) **POLYMERIC MATERIALS FORMED USING BLENDS OF ELECTRON DONORS**

POLYMERMATERIALEN HERGESTELLT DURCH DIE VERWENDUNG VON
ELEKTRONENDONORMISCHUNGEN

MATIERES POLYMERES OBTENUES A PARTIR DE MELANGES D'ELECTRODONNEURS

(84) Designated Contracting States:
**BE DE ES FR GB IT NL**

(30) Priority: **14.05.1998 US 85498 P**
**14.05.1998 US 79425**

(43) Date of publication of application:
**07.03.2001 Bulletin 2001/10**

(73) Proprietor: **ExxonMobil Chemical Patents Inc.**
**Baytown, TX 77520-5200 (US)**

(72) Inventors:
• **MIRO, Nemesio, D.**
**Seabrook, TX 77586 (US)**

• **OHKURA, Masatoshi**
**Otsu, Shiga 520-0842 (JP)**

(74) Representative: **Dörries, Hans Ulrich, Dr. et al**
**Dörries Frank-Molnia Pohlman**
**Postfach 22 16 61**
**80506 München (DE)**

(56) References cited:
**EP-A- 0 601 496          EP-A- 0 657 477**
**EP-A- 0 717 053          EP-A- 0 790 262**
**WO-A-95/21203           WO-A-97/43321**
**US-A- 5 652 303**

**Description**

## FIELD OF THE INVENTION

This invention relates to novel, high flexural moduli polymeric materials, i.e., in situ polymerized polypropylene homopolymers, formed by a single stage polymerization process conducted in the presence of a blend of electron donor materials. These novel polypropylene homopolymers can be further used to make high impact polypropylene copolymers. In particular, the present inventors have discovered that by using a blend of a first donor material and a second electron donor material each having different hydrogen responses and stereoregulating properties, an olefin polymer exhibiting an unusually good balances of impact resistance, flexural strength and processability can be provided.

## BACKGROUND OF THE INVENTION

The physical properties of homopolymers of propylene formed by typical Ziegler-Natta polymerization are highly dependent on the stereoregularity of the polymer itself. Highly stereoregular polymers are generally crystalline, provide desirable high flexural moduli and are formed with a suitable choice of electron donor. These highly crystalline polymers also display high melting points, but innately exhibit low melt flow rates (MFR) that render them generally unsuitable for applications that require high processing rates, such as in injection molding, oriented films and thermobond fibers. Further, conventional polypropylene homopolymer and copolymer products formed from highly crystalline polypropylenes lack sufficient impact resistance for many intended uses.

The addition of various electron donor materials to Ziegler-Natta catalysts has been known to influence the degree of stereoregularity in polypropylene homopolymers and copolymers. Generally, a single base catalyst (e.g., a magnesium chloride supported base Ziegler-Natta catalyst) can be used in combination with any number of electron donor materials, each of which, or combinations of which, will lead to a specific level of stereoregularity and MFR. One of the properties of electron donors is that the polypropylene MFR, at the same reactor hydrogen level, decreases with increasing polypropylene stereoregularity caused by the donor. Additional hydrogen is required to reach desirable MFRs when highly stereoregulating donors are employed.

Use of the term copolymer herein, is intended to mean those polymeric materials often known as impact copolymers. Impact copolymers typically include homopolymer polypropylene (homo PP) and an ethylene-propylene copolymer component. All references to the term copolymer are intended to include only impact copolymers (ICP) and not statistical or random copolymers. The production of such ICP's is discussed in Polypropylene Handbook, pg. 92, Hansen Publishers.

This relationship between stereoregularity and MFR poses a problem in processes that have hydrogen pressure limitations. In polypropylene manufacturing plants, hydrogen is used for as a chain transfer agent, which controls the molecular weight of the polypropylene. Molecular weight (MW) of the polypropylene decreases, i.e., the MFR of the polymer increases, with hydrogen concentration in a polymerization reactor. The phrase "MFR/hydrogen response" is typically used to express the efficiency of hydrogen as a chain transfer agent in the polymerization catalyst system process. A catalyst system with higher MFR/hydrogen response will generally produce higher MFR polypropylene at a fixed hydrogen concentration. The maximum MFR in the plant or process is defined by the MFR/hydrogen response of the catalyst system and the maximum $H_2$ levels achievable. Higher MFR polypropylene has been required for larger scale injection molding processes producing items such as automotive or appliance parts. Such MFR's are typically in the range of from 30-100 dg/min. for copolymers, and 75- 180 dg/min. for homopolymers.

On the other hand, polypropylene with higher crystallinity also has been required to enhance the stiffness and heat distortion temperature of the above discussed products. Crystallinity of polypropylene is defined by the catalyst system. To compare the ability of catalyst systems to produce higher crystallinity polypropylene, crystallinity of the polypropylene at fixed MFR can be used, because crystallinity of polypropylene increases with MFR of the polypropylene. Crystallinity is usually evaluated with heat of fusion (defined herein by ($\Delta H_m$) or alternatively heat of melting) from DSC (Differential Scanning Calorimeter) measurements.

Polypropylene manufacturers have exerted substantial efforts over the past few years to develop a catalyst system which has both higher MFR/hydrogen response and the ability to produce higher crystallinity polypropylene. Higher MFR polypropylene with higher crystallinity is, for example, applied to automotive applications because larger scale injection molded parts with higher stiffness are required.

In processes wherein the desired hydrogen pressure cannot be reached, a more hydrogen responsive donor material must be used. However, the use of such donor materials leads to the formation of less stereoregular polypropylenes with more amorphous polypropylene by-products, producing polypropylenes that lack sufficient flexural moduli for the intended uses of an automotive trim part. Thus, processes that have hydrogen pressure limitations pose a problem because the final achievable MFR will be determined by the choice of electron donor, which in turn determines the level of polypropylene stereoregularity in the final product.

U.S. Patent No. 5,652,303 ('303) to Ishimaru et al. suggests a method of forming a polypropylene in which propylene monomer is polymerized in the presence of a catalyst system including a solid titanium based Ziegler-Natta catalyst having an internal electron donor component, an organoaluminum compound co-catalyst and a blend of at least two electron donors including an electron donor (A) and an electron donor (B) wherein a relationship between the MFR (a) of homopropylene obtained by using electron donor (A), together with the specified titanium catalyst and organo-aluminum co-catalyst; and the MFR (b) of homopropylene obtained by using electron donor (B), together with the same catalyst and co-catalyst is defined by the equation:

$$\log [MFR(b)/MFR(a)] \geq 1.5.$$

The use of a blend of two such electron donors purportedly leads to a broader molecular weight distribution (MWD), exemplified in'303 by MWD's in the range of 6.28 to 8.25, comparative examples ranging from 3.99 to 4.08. The broadening of the MWD allegedly leads to a polymer providing an improved processability.

Therefore, it would be highly desirable to synthesize polypropylene homopolymers in a single stage, in situ polymerization process that forms homopolymers that display both high flexural moduli and high MFRs. The present inventors have discovered that polymerization of an $\alpha$-olefin in the presence of certain magnesium supported, titanium-base Ziegler-Natta catalyst systems and certain blends of electron donors will result in polymers simultaneously providing higher MFRs and higher levels of crystallinity, leading also to high modulus. It has been further found by the present inventors that the use of such blends of electron donors increases both MFR and crystallinity without substantially increasing MWD. The present invention also provides many additional advantages which shall become apparent as described below.

## SUMMARY OF THE INVENTION

Novel in situ polymerized materials (e.g., polypropylene) with substantial degrees of crystallinity and high MFRs can be produced in a single stage polymerization conducted in the presence of certain supported Ziegler-Natta catalysts and a blend of two electron donors including 2.5 to less than 50 mol.% dicyclopentyldimethoxysilane (DCPMS) and greater than 50 mol.% propyltriethoxysilane (PTES) based on total molest of electron donors.

A method is presented for forming in situ polymerized homopolymer components that have a relatively narrow molecular weight distribution yet display a high flexural modulus indicative of highly crystalline, isotactic polymer, concurrently with a high MFR. Previously, high MFRs were exhibited only by lesser stereoregular polymers having a higher amorphous content than desireable. The method includes the subjection of an $\alpha$-olefin (e.g., propylene, 1-butene, 1-pentene, 1-hexene, and the like) to a single stage polymerization in the presence of a supported Ziegler-Natta catalyst and a blend of two electron donors including 2.5 to less than 50 mol.% dicyclopentyldimethoxysilane (DCPMS) and greater than 50 mol.% propyltriethoxysilane (PTES) based on the total moles of the electron donors.

Another aspect of the present invention is a blend comprising a Ziegler-Natta catalyst and a first and second electron donor, said blend containing from 2.5 mol.% to less than 50 mol.% of dicyclopentyldimethoxysilane (DCPMS) and greater than 50 mol.% of propyltriethoxysilane (PTES), based on the total moles of the electron donors.

Other and further objects, advantages and features of the present invention will be understood by reference to claims which follow this specification.

## BRIEF DESCRIPTION OF THE DRAWINGS

Fig. 1 is a graph plotting MFR at a constant hydrogen pressure versus $\Delta H_m$ at a fixed rate, 70 MFR for conventional electron donors used individually and blends containing different ratios of propyltriethoxysilane (PTES) and dicyclopentyl dimethoxysilane (DCPMS) electron donors.

Fig. 2 shows the plot of crystallinity ($\Delta H_m$) as a function of the polymer MFR for the individual donors. This was obtained by carrying out polymerizations with each donor at different levels of hydrogen to vary the MFR. The intersection of the crystallinity/MFR line with the vertical line set at 70-MFR represents the crystallinity at 70-MFR, which is the value used in Fig. 1.

Fig. 3 is similar to Fig. 2, but using four different ratios of propyltriethoxysilane (PTES) and dicyclopentyl dimethoxysilane (DCPMS) electron donors. From the figure, the crystallinity at 70-MFR was also obtained and used in Fig. 1.

## DETAILED DESCRIPTION OF THE INVENTION

The homopolymer of the single stage, in situ polymerization process of certain embodiments of the present invention simultaneously display high flexural moduli (nucleated homopolymer exhibiting flexural moduli in the range of 220 - 315 K psi, preferably 280 - 315 K psi) (with a $\Delta H_m$ in the range of from 95-120 J/g) normally associated with highly crystalline polymers, a high melt flow rate (MFRs) normally associated with less stereoregular polymers and a relatively narrow molecular weight distribution (MWD), generally in the range of from 3-6, preferably 3.5 - 5.5. These novel homopolymer components are formed in a process where, for example, propylene is subjected to a single stage polymerization in the presence of a Ziegler-Natta catalyst and a blend of two electron donors including about 2.5 to less than 50 mol.% dicyclopentyldimethoxysilane (DCPMS) and greater than about 50 mol.% propyltriethoxysilane (PTES).

Certain Ziegler-Natta catalysts useful in the practice of the present invention are a solid titanium supported catalyst systems described in US-A-4990479 and US-A-5159021. Briefly, the Ziegler-Natta catalyst can be obtained by: (1) suspending a dialkoxy magnesium compound in an aromatic hydrocarbon that is liquid at ambient temperatures; (2) contacting the dialkoxy magnesium-hydrocarbon composition with a titanium halide and with a diester of an aromatic dicarboxylic acid; and (3) contacting the resulting functionalized dialkoxy magnesium-hydrocarbon composition of step (2) with additional titanium halide. A particularly suitable solid catalyst component is a catalyst solid sold by TOHO Titanium Company, Ltd. under the trade name of THC-C-133. Such a catalyst is used to exemplify the invention, other titanium supported catalyst systems are contemplated. Other catalyst use mechanisms are contemplated. Including, but not limited to, batch prepolymerization, in situ prepolymerization and other such mechanisms.

Certain supported Ziegler-Natta catalysts may be used in combination with a co-catalyst. The co-catalyst is preferably an organoaluminum compound that is halogen free. Suitable halogen free organoaluminum compounds are, in particular, branched unsubstituted alkylaluminum compounds of the formula $AlR_3$, where R denotes an alkyl radical having 1 to 10 carbon atoms, such as for example, trimethylaluminum, triethylaluminum, triisobutylaluminum and tridiisobutylaluminum. Additional compounds that are suitable for use as a co-catalyst are readily available and amply disclosed in the prior art including US-A-4990477, which is incorporated herein by reference for purposes of US patent practice. A particularly suitable organoaluminum co-catalyst is triethylaluminum (TEAL).

Electron donors are typically used in two ways in the formation of Ziegler-Natta catalysts and catalyst systems. An internal electron donor may be used in the formation reaction of the catalyst as the transition metal halide is reacted with the metal hydride or metal alkyl. Examples of internal electron donors include amines, amides, ethers, esters, aromatic esters, ketones, nitriles, phosphines, stilbenes, arsines, phosphoramides, thioethers, thioesters, aldehydes, alcoholates, and salts of organic acids. In conjunction with an internal donor, an external electron donor is also used in combination with a catalyst. External electron donors generally affect the level of stereoregularity and MFR in polymerization reactions. External electron donor materials include but are not limited to, organic silicon compounds, e. g. tetraethoxysilane (TEOS), methylcyclohexyldimethoxysilane (MCMS), propyltriethoxysilane (PTES) and dicyclopentyldimethoxysilane (DCPMS). Internal and external-type electron donors are described, for example, in US-A-4535068, which is incorporated herein by reference for purposes of US patent practice. The use of organic silicon compounds as external electron donors is described, for example, in U.S. Patent Nos. 4,218,339, 4,395,360, 4,328,122 and 4,473,660, all of which are incorporated herein by reference for purposes of US patent practice. The blend of electron donors of the present invention is a blend of external electron donors used as stereoregulators, in combination with Ziegler-Natta catalysts. Therefore, except when otherwise indicated, the term "electron donor", as used herein, refers specifically to external electron donor materials.

The external electron donors act to control stereoregularity, which affects the amount of isotactic versus atactic polymers produced in a given system. The more stereoregular isotactic polymer is more crystalline, which leads to a material with a higher flexural modulus. Highly crystalline, isotactic polymers also display lower MFRs, as a consequence of a reduced hydrogen response during polymerization. The stereoregulating capability and hydrogen response of a given electron donor are directly and inversely related. The DCPMS donor has a substantially lower hydrogen response than the PTES donor, but produces a significantly higher level of stereoregularity than PTES.

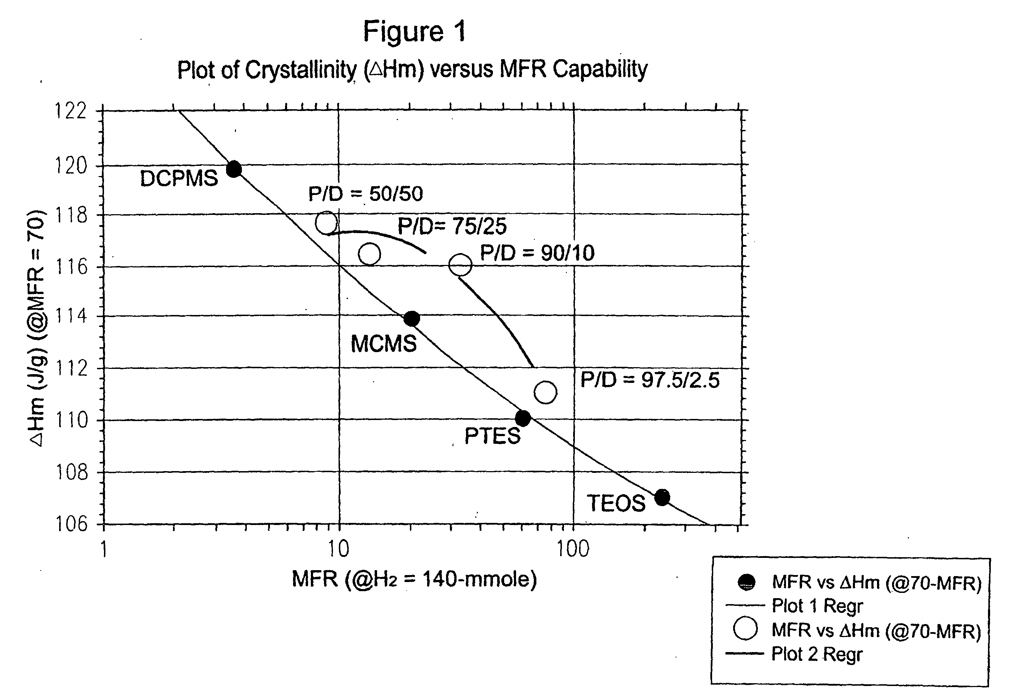

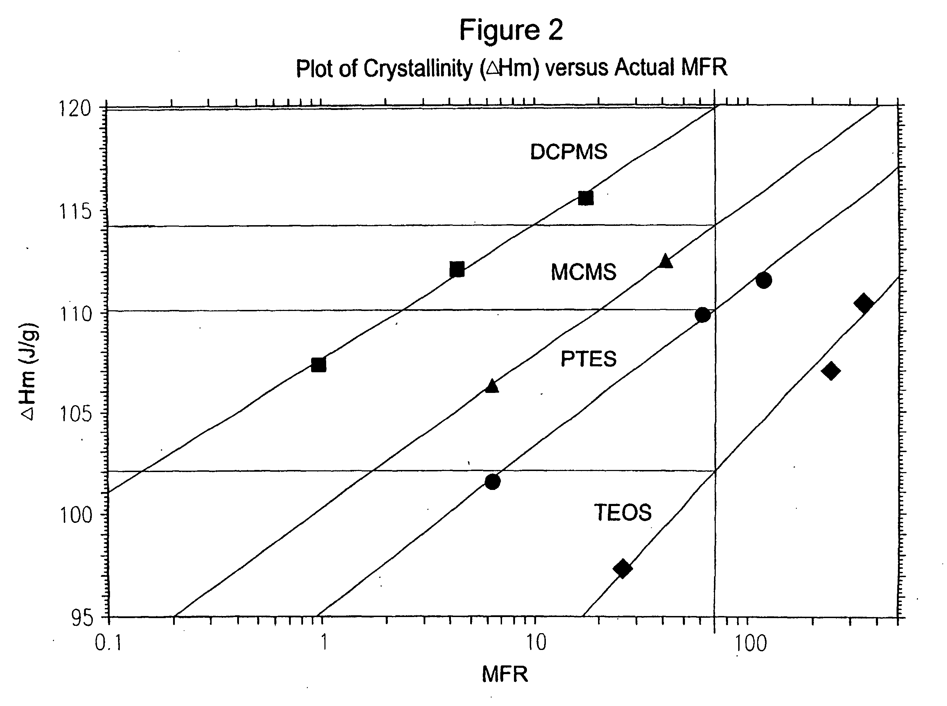

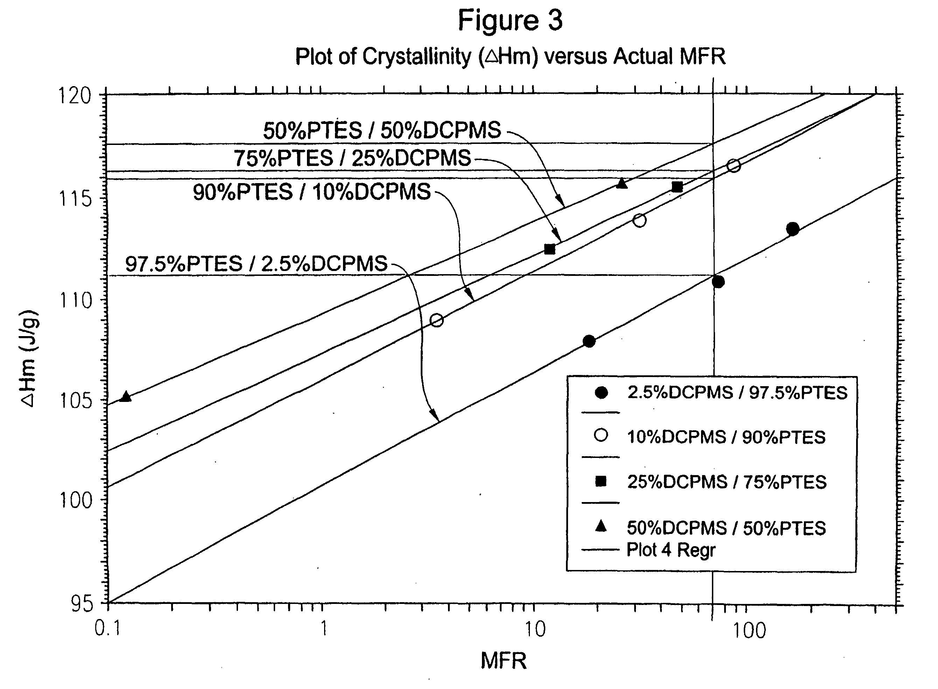

As shown in Fig. 1, DCPMS is more stereoregulating, and will, at an equal reactor hydrogen pressure, provide a higher level of crystallinity and lower MFR than the lesser stereoregulating PTES donor. The X-axis represents the actual MFR that is obtained when using the specified polymerization donors, with all experiments carried out at 140-mmole of hydrogen, as shown in the experimental section (B). The Y-axis represents the corresponding crystallinity (based on DSC heat-of-melting values, $\Delta H_m$) for a polymer having an MFR of 70 for each specified donor. The Y-values were obtained from a separate set of experiments, where the amount of hydrogen used during the polymerization was varied at different levels, in order to obtain a plot of the MFR versus the crystallinity (Figures 2 and 3). It is important to compare the crystallinity at a fixed MFR value because the polypropylene product applications are designed based largely on MFR specifications , because crystallinity of polypropylene increases with MFR of the polypropylene. For the individual donors, an almost linear plot is obtained, which shows a decreasing crystallinity with MFR, when going from DCPMS to MCMS, PTES, and TEOS, respectively. The use of different ratios of propyltriethoxysilane (PTES) and dicyclopentyl dimethoxysilane (DCPMS) electron donors exhibit a different curve which is outside of the line for the individual donors by themselves. The use of the mixed donor system, starting at the 50/50 mole % PTES/DCPMS and up to 97.2%/2.5% PTES/DCPMS, shows higher crystallinity/MFR balance than for the individual donors. The dotted line, of Fig. 1 shows the surprising and unexpected result of using the specified blend of PTES and DCPMS. Specifically, the dotted line shows that at a constant hydrogen pressure, for any given MFR, a blend of PTES and DCPMS containing 2.5 mol.% to less than 50 mol.% DCPMS and more than 50 mol.% PTES provides a higher level of crystallinity than would be expected from the average hydrogen response of such a blend, represented by the continuum of the solid line of Fig. 1. This improved degree of crystallinity relative to MFR is not realized when the blend contains less than 2.5 mol.% DCPMS or less than 50 mol.% PTES.

## EXPERIMENTAL

### (A) DSC (Differential Scanning Calorimetry)

A TA-200/DSC-10 instrument purchased from TA Instruments, Inc. was used to measure the thermal properties of the polymers. 8-13 mgs sample of either a polymer granule or a pelletize sample was placed in the cell and the cell purged with nitrogen at room temperature for five minutes. Then the temperature was raised to 230°C at a heating rate of 50°C per minute. The temperature was held for ten minutes, followed by cooling to 50°C at a cooling rate of 10°C per minute. After reaching 50°C, the sample was again heated to 200°C at the rate of 10°C per minute. The heat of melting was measured and the result is designated as ΔHm.

### (B) Polymerization Process in a Batch Reactor

In a 2 liter autoclave polymerization reactor that has been thoroughly cleaned, dried, and purged well with nitrogen was charged, by a syringe an 0.15-0.2 mmole silane donor (from a 0.1M solution in hexane). Then 1.5-2.0 mmole of TEAL (from a 1.0 M solution in hexane) was added, and the reactor was blocked off. A specified amount of hydrogen in mmoles was charged from a 300-ml container under high hydrogen pressure. Catalyst in the amount of 8-15 mgs catalyst solid was charged into the reactor by pushing through the catalyst feed tube about 250-cc of liquid propylene. This was followed by introducing 1000-cc of liquid propylene. The reactor temperature was raised from room temperature to 70°C, and the polymerization reaction was allowed to continue for one hour. After the polymerization period, the excess propylene was vented out of the reactor and the remaining polymer was collected and dried under a vacuum oven. The polymer was pelletized with 500 ppm butylated hydroxy toluene (BHT) and samples were taken for MFR, MWD molecular weight distribution, and DSC measurements.

Tables I, II and III show the results the polymerization used to generate Figures 1, 2, and 3.

Table I

| Effects of Donor Type on PP-Crystallinity (ΔHm) and MFR-Capability | | | | |
|---|---|---|---|---|
| Sample No. | Donor Type | H$_2$(mmole) | MFR | ΔHm (J/g) @ 70-MFR* |
| 18270-87 | DCPMS | 140 | 3.43 | 119.8 |
| 19987-125 | MCMS | 140 | 19.5 | 113.8 |
| 18270-37 | PTES | 140 | 59.2 | 110.0 |
| 11373-135-32 | TEOS | 140 | 229.9 | 107.0 |

*Derived from Figure 2

Table II

| Effects of Mixed-Donor Type on PP-Crystallinity (ΔHm) and MFR-Capability | | | | |
|---|---|---|---|---|
| Sample No. | Donor Type (Mole %) | H$_2$(mmole) | MFR | ΔHm (J/g) @ 70-MFR* |
| 19987-84 | 97.5%PTES/2.5% DCPMS | 140 | 73.9 | 111.0 |
| 19987-54 | 90% PTES/10% DCPMS | 140 | 31.5 | 116.0 |

*Derived from Figure 3

Table II   (continued)

| Effects of Mixed-Donor Type on PP-Crystallinity (ΔHm) and MFR-Capability | | | | |
|---|---|---|---|---|
| Sample No. | Donor Type (Mole %) | H$_2$(mmole) | MFR | ΔHm (J/g) @ 70-MFR* |
| 19987-85 | 75%PTES/25% DCPMS | 140 | 12.8 | 116.4 |
| 1-87-83 | 50% PTES/50% DCPMS | 140 | 8.47 | 117.6 |

*Derived from Figure 3

Table III

| Effects of Mixed-Donor Type on PP-Crystallinity (ΔHm) and MFR-Response | | | | |
|---|---|---|---|---|
| Sample No. | Donor Type | H$_2$(mmole) | Actual MFR | ΔHm (J/g) of Actual MFR |
| 11373-136-03 | 100% DCPMS | 75 | 0.93 | 107.2 |
| 11373-135-27 | " | 159 | 4.10 | 112.0 |
| 1.1370-133-30 | " | 375 | 16.80 | 115.5 |
| 11373-136-11 | 100% MCMS | 75 | 6.00 | 106.1 |
| 17942-005-21 | " | 278 | 39.80 | 112.3 |
| 18270-39 | 100% PTES | 30 | 6.2 | 101.5 |
| 18270-37 | " | 140 | 59.2 | 109.8 |
| 18270-51 | " | 183 | 112.4 | 111.5 |
| 11373-135-29 | 100% TEOS | 37 | 26.4 | 97.4 |
| 11373-135-32 | " | 140 | 229.9 | 107.0 |
| 17942-05-16 | " | 187 | 321.1 | 110.4 |
| 19562-78 | 97.5%PTES/2.5 %DCPMS | 78 | 18.20 | 108.0 |
| 19987-84 | " | 140 | 73.90 | 110.7 |
| 19562-80 | " | 209 | 162.00 | 113.5 |
| 19562-168 | 90% PTES/10% DCPMS | 47 | 3.59 | 109.1 |
| 19987-54 | " | 142 | 31.50 | 113.9 |
| 19562-76 | " | 235 | 87.20 | 116.6 |
| 19987-66 | 75%PTES/25% DCPMS | 147 | 12.00 | 112.6 |
| 19562-140 | " | 281 | 47.60 | 115.5 |
| PPlant/Condition E | 50% PTES/50% DCPMS | 500 ppm to total Propylene | 0.12 | 105.3 |
| 1965-144 | " | 243 | 25.90 | 115.7 |

Some polymer MWD results are tabulated in Table IV.

Table IV

| - Polymer MWD By GPC | | | | |
|---|---|---|---|---|
| Sample No. | Donor Type (Mole %) | H$_2$(mmole) | MFR | MWD |
| 19697-54 | DCPMS | 279 | 2.72 | 3.37 |

Table IV   (continued)

| - Polymer MWD By GPC | | | | |
|---|---|---|---|---|
| Sample No. | Donor Type (Mole %) | H$_2$(mmole) | MFR | MWD |
| | " | - | 8.8 | 4.44 |
| 19697-29 | PTES | 100 | 42.6 | 3.01 |
| | " | - | 101 | 3.95 |
| | 90% PTES/10% DCPMS | - | 87 | 4.53 |

The relationship of MFR response of the PTES donor with respect to the DCPMS when polymerized under the same hydrogen concentration and using the specified THC-C-133 catalyst is shown the Table V below.

Table V

| MFR Ratio Relationship Between Using PTES and DCPMS | | | | |
|---|---|---|---|---|
| Sample No. | Donor Type (Mole %) | MFR at 140-mmole H$_2$ | MFR at 233-mmole H$_2$ | Log (MFRb/MFRa) |
| 18270-87 | DCPMS | 3.43 = a | | 1.24 |
| 18270-37 | PTES | 59.2= b | | |
| 20565-153 | DCPMS | | 13.3 = a | 1.22 |
| 20864-47 | PTES | | 222= b | |

The results shown in Table V show that for the two levels of hydrogen concentration used during the polymerization, both values obtained from calculating the Log (MFRb/MFRa) as an MFR-response relationship index from the donors PTES (b-donor) and DCPMS (a-donor) are less than 1.35. And therefore these values are in a region not described by Ishimaru in US 5,652,303.

The following Table VI illustrates the relationship of ΔHm with other cyrstallinity measurements such as heptane insulubles (%HI) and polymer isotactic sequence sequence length (MRL-meso run length) as measured by NMR.

Table VI

| Relationship Between ΔHm with HI and MRL | | | | | | |
|---|---|---|---|---|---|---|
| Sample No. | DCPMS (mmole) | H$_2$ (mmole) | MFR | ΔHm (J/g) | HI (%) | MRL NMR |
| 18270-12-19 | 0 | 75 | 87.3 | 67.44 | 58.5 | 52 |
| 18270-12-26 | 0.006 | 75 | 1.6 | 88.71 | 96.6 | 130 |
| 18270-12-25 | 0.02 | 75 | 1 | 103 | 98.3 | 254 |
| 18270-06-09 | 0.20 | 75 | 1.9 | 104.2 | 98.6 | 366 |
| 18270-12-23 | 1.00 | 75 | 0.8 | 106.4 | 99.0 | 462 |

The results in Table VI show that the heat of melting (ΔHm) increases with increasing HI and MRL, which are both well known measures of polymer crystallinity.

In general, the catalyst system and donor blend are chosen such that a relationship between a first melt flow rate of a homopolymer formed by polymerizing an alpha-olefin monomer in the presence of a Ziegler-Natta catalyst system and a first electron donor (MFR (a)), and a second melt flow rate of a homopolymer formed by polymerizing an α-olefin monomer in the presence of the Ziegler-Natta catalyst system and a second electron donor (MFR (b)), is defined by the equation;

$$1.2 \leq \log [MFR(b)/MFR(a)] \leq 1.4.$$

Preferably the α-olefin is chosen from the group consisting of a propylene, 4-methyl-1-pentene, 1-hexene, 1-butene, 1-hexene, 1-decene, 1-dodecene, 1-nonene, and mixtures thereof. Where a copolymer is made, the comonomer may include ethylene.

Propylene is the preferred α-olefin.

DCPMS is the preferred electron donor corresponding to a first electron donor, PTES is the preferred second electron donor.

While preferred embodiments in accordance with the invention have been shown and described, it is to be clearly understood that the same are susceptible to numerous changes apparent to one of ordinary skill in the art. Therefore, the invention should not be deemed to be limited to the details shown and described above, but should be considered to include all changes and modifications that come within the scope of the appended claims.

**Claims**

1.  A method of polymerizing an α-olefin monomer, said method comprising:

     subjecting said α-olefin monomer to polymerization in the presence of a Ziegler-Natta catalyst system and a blend of electron donors, said blend of electron donors containing 2.5 mol.% to less than 50 mol.% of dicyclopentyldimethoxysilane (DCPMS) and greater than 50 mol.% of propyltriethoxysilane (PTES), based on the total moles of the electron donors.

2.  The method of claim 1, wherein the α-olefin monomer is selected from the group consisting of: propylene, 1-butene, 1-pentene, 1-hexene, 1-heptene, 1-octene, 1-nonene, and 1-decene and mixtures thereof.

3.  The method of claim 2, wherein the α-olefin is propylene.

4.  The method of claim 1, wherein the obtained polymer is an ethylene-propylene copolymer including homopolymer polypropylene and ethylene-propylene copolymer components.

5.  The method of any one of claims 1 to 4, wherein the Ziegler-Natta catalyst system includes a magnesium supported titanium-based solid catalyst.

6.  The method of claim 5, wherein the magnesium supported titanium-based solid catalyst is a magnesium chloride supported titanium-based solid catalyst.

7.  The method of claims 5 or 6, wherein the magnesium supported titanium-based solid catalyst includes an internal electron donor component.

8.  The method of any one of claims 1 to 7, wherein the Ziegler-Natta catalyst system comprises a co-catalyst.

9.  The method of claim 8, wherein the co-catalyst is a halogen free organoaluminum co-catalyst.

10.  A blend comprising a Ziegler-Natta catalyst and a first and second electron donor, said blend containing 2.5 mol.% to less than 50 mol.% of dicyclopentyldimethoxysilane (DCPMS) and greater than 50 mol.% of propyltriethoxysilane (PTES), based on the total moles of the electron donors.

11.  The blend of claim 10, wherein the Ziegler-Natta catalyst includes a magnesium supported titanium-based solid catalyst.

12.  The blend of claim 11, wherein the magnesium supported titanium-based solid catalyst is a magnesium chloride supported titanium-based solid catalyst.

13.  The blend of claims 11 or 12, wherein the magnesium supported titanium-based solid catalyst includes an internal electron donor component.

14.  The blend of any one of claims 10 to 13, further comprising a co-catalyst.

15.  The blend of claim 14, wherein the co-catalyst is a halogen free organoaluminum co-catalyst.

**EP 1 080 122 B1**

**Patentansprüche**

1. Verfahren zum Polymerisieren eines monomeren α-Olefins, **dadurch gekennzeichnet, dass** man das monomere α-Olefin in Gegenwart eines Ziegler-Natta-Katalysatorsystems und einer Mischung von Elektronendonatoren der Polymerisation unterwirft, wobei die Mischung von Elektronendonatoren 2,5 Mol-% bis weniger als 50 Mol-% Dicyclopentyldimethoxysilan (DCPMS) und mehr als 50 Mol-% Propyltriethoxysilan (PTES) enthält, jeweils bezogen auf die Gesamtzahl der Mole der Elektronendonatoren.

2. Verfahren nach Anspruch 1, **dadurch gekennzeichnet, dass** das monomere α-Olefin ausgewählt wird aus der Gruppe, die aus Propylen, 1-Buten, 1-Penten, 1-Hexen, 1-Hepten, 1-Octen, 1-Nonen und 1-Decen sowie Mischungen dieser α-Olefine besteht.

3. Verfahren nach Anspruch 2, **dadurch gekennzeichnet, dass** das α-Olefin Propylen ist.

4. Verfahren nach Anspruch 1, **dadurch gekennzeichnet, dass** das erhaltene Polymer ein Ethylen-Propylen-Copolymer ist, das homopolymeres Polypropylen und Ethylen-Propylen-Copolymer als Komponenten enthält.

5. Verfahren nach einem der Ansprüche 1 bis 4, **dadurch gekennzeichnet, dass** das Ziegler-Natta-Katalysatorsystem einen auf Magnesium geträgerten festen Katalysator auf Basis von Titan enthält.

6. Verfahren nach Anspruch 5, **dadurch gekennzeichnet, dass** der auf Magnesium geträgerte feste Katalysator auf Basis von Titan ein auf Magnesiumchlorid geträgerter fester Katalysator auf Basis von Titan ist.

7. Verfahren nach einem der Ansprüche 5 oder 6, **dadurch gekennzeichnet, dass** der auf Magnesium geträgerte feste Katalysator auf Basis von Titan einen internen Elektronendonator als Komponente enthält.

8. Verfahren nach einem der Ansprüche 1 bis 7, **dadurch gekennzeichnet, dass** das Ziegler-Natta-Katalysatorsystem einen Cokatalysator enthält.

9. Verfahren nach Anspruch 8, **dadurch gekennzeichnet, dass** der Cokatalysator ein halogenfreier Organoaluminium-Cokatalysator ist.

10. Eine Mischung, **gekennzeichnet durch** einen Ziegler-Natta-Katalysator sowie einen ersten und einen zweiten Elektronendonator, wobei die Mischung 2,5 Mol-% bis weniger als 50 Mol-% Dicyclopentyldimethoxysilan (DCPMS) und mehr als 50 Mol-% Propyltriethoxysilan (PTES) enthält, jeweils bezogen auf die Gesamtzahl der Mole der Elektronendonatoren.

11. Mischung nach Anspruch 10, **dadurch gekennzeichnet, dass** der Ziegler-Natta-Katalysator einen auf Magnesium geträgerten festen Katalysator auf Basis von Titan enthält.

12. Mischung nach Anspruch 11, **dadurch gekennzeichnet, dass** der auf Magnesium geträgerte feste Katalysator auf Basis von Titan ein auf Magnesiumchlorid geträgerter fester Katalysator auf Basis von Titan ist.

13. Mischung nach Anspruch 11 oder 12, **dadurch gekennzeichnet, dass** der auf Magnesium geträgerte feste Katalysator auf Basis von Titan einen internen Elektronendonator als Komponente enthält.

14. Mischung nach einem der Ansprüche 10 bis 13, **dadurch gekennzeichnet, dass** sie weiterhin einen Cokatalysator enthält.

15. Mischung nach Anspruch 14, **dadurch gekennzeichnet, dass** der Cokatalysator ein halogenfreier Organoaluminium-Cokatalysator ist.

**Revendications**

1. Procédé de polymérisation d'un monomère α-oléfinique, ledit procédé comprenant l'étape consistant à : soumettre ledit monomère α-oléfinique à une polymérisation en présence d'un système catalytique Ziegler-Natta et d'un mélange de donneurs d'électrons, ledit mélange de donneurs d'électrons contenant 2,5 % en moles à moins de 50 % en moles de dicyclopentyldiméthoxysilane (DCPMS) et plus de 50 % en moles de propyltriéthoxysilane (PTES), par rapport aux moles totales des donneurs d'électrons.

**2.** Procédé selon la revendication 1, dans lequel le monomère $\alpha$-oléfinique est choisi dans la classe formée par : le propylène, le butène-1, le pentène-1, l'hexène-1, l'heptène-1, l'octène-1, le nonène-1 et le décène-1, et leurs mélanges.

**3.** Procédé selon la revendication 2, dans lequel la $\alpha$-oléfine est le propylène.

**4.** Procédé selon la revendication 1, dans lequel le polymère obtenu est un copolymère éthylène-propylène comprenant du polypropylène homopolymère et du copolymère éthylène-propylène comme constituants.

**5.** Procédé selon l'une quelconque des revendications 1 à 4, dans lequel le système catalytique Ziegler-Natta comprend un catalyseur solide à base de titane sur support de magnésium.

**6.** Procédé selon la revendication 5, dans lequel le catalyseur solide à base de titane sur support de magnésium est un catalyseur solide à base de titane sur support de chlorure de magnésium.

**7.** Procédé des revendications 5 ou 6, dans lequel le catalyseur solide à base de titane sur support de magnésium comprend un composant donneur d'électrons interne.

**8.** Procédé selon l'une quelconque des revendications 1 à 7, dans lequel le système catalytique Ziegler-Natta comprend un co-catalyseur.

**9.** Procédé selon la revendication 8, dans lequel le co-catalyseur est un co-catalyseur du type organoaluminium sans halogène.

**10.** Mélange comprenant un catalyseur Ziegler-Natta et un premier et un second donneurs d'électrons, ledit mélange contenant 2,5 % en moles à moins de 50 % en moles de dicyclopentyldiméthoxysilane (DCPMS) et plus de 50 % en moles de propyltriéthoxysilane (PTES), par rapport aux moles totales des donneurs d'électrons.

**11.** Mélange selon la revendication 10, dans lequel le catalyseur Ziegler-Natta comprend un catalyseur solide à base de titane sur support de magnésium.

**12.** Mélange selon la revendication 11, dans lequel le catalyseur solide à base de titane sur support de magnésium est un catalyseur solide à base de titane sur support de chlorure de magnésium.

**13.** Mélange selon les revendications 11 ou 12, dans lequel le catalyseur solide à base de titane sur support de magnésium comprend un composant donneur d'électrons interne.

**14.** Mélange selon l'une quelconque des revendications 10 à 13, comprenant de plus un co-catalyseur.

**15.** Mélange selon la revendication 14, dans lequel le co-catalyseur est un co-catalyseur du type organoaluminium sans halogène.

# Figure 1

## Plot of Crystallinity (ΔHm) versus MFR Capability

EP 1 080 122 B1

# Figure 2
## Plot of Crystallinity (△Hm) versus Actual MFR

EP 1 080 122 B1

# Figure 3

## Plot of Crystallinity (△Hm) versus Actual MFR

EP 1 080 122 B1